# FASCICULE DE BREVET EUROPEEN

(11) **EP 3 338 983 B1**
(45) Date de publication et mention de la délivrance du brevet: **04.11.2020**
(21) Numéro de dépôt: 17204089.1
(22) Date de dépôt: 28.11.2017
(51) Int. Cl.: B29C 33/44, B29C 33/12, B29C 37/00

(54) **MOULE POUR FORMER DES COMPOSANTS DE VÉHICULE AUTOMOBILE**
FORM ZUM FORMGIESSEN VON KOMPONENTEN EINES KRAFTFAHRZEUGS
MOULD FOR FORMING MOTOR VEHICLE COMPONENTS

(30) Priorité: 22.12.2016 CN 201621418124 U
(43) Date de publication de la demande: 27.06.2018
(73) Titulaire: Compagnie Plastic Omnium, 69007 Lyon (FR)
(72) Inventeur: TORRES, Olivier, 69230 Saint-Genis Laval (FR); HUMMER, Emilien, 69580 Sathonay Village (FR)
(74) Mandataire: LLR

(56) Documents cités:
- WO-A1-2016/016550
- CN-U- 205 651 601
- DE-A1- 10 313 911

## Description

La présente invention concerne le domaine technique de la fabrication de composants en matière plastique pour les véhicules automobiles, et concerne notamment le domaine du surmoulage d'insert de composant pour véhicule automobile.

Plus concrètement, la présente invention concerne un moule servant au surmoulage d'insert, comportant un système utilisé pour maintenir l'insert dans le moule.

Dans de nombreuses industries, et notamment dans l'industrie des véhicules automobiles, on fabrique et on utilise des composants mixtes comportant des inserts métalliques ou en plastique et des parties en plastique surmoulées sur ces inserts, de façon à pouvoir satisfaire aux exigences imposées, par exemple aux exigences concernant la masse ou la résistance mécanique. Ce surmoulage peut être réalisé par différentes techniques de moulage, comme le moulage par compression ou le moulage par injection.

Pour ce surmoulage, l'insert est placé dans la chambre de moulage du moule avant que la matière plastique ne soit introduite ou coulée, ou encore (dans certains cas) après cela. Selon la technique utilisée, la matière plastique peut se présenter sous la forme de feuilles de résine comportant des renforts, par exemple des feuilles de SMC (en anglais « Sheet Molding Compound ») (notamment pour le moulage par compression), ou bien sous la forme de plastique thermoplastique fluide (pour le moulage par injection).

Cependant, lors du moulage, il est impératif de conserver l'insert dans une position déterminée pour obtenir des résultats demandés. En réalité, pendant les différentes étapes du moulage, l'insert se déplace, notamment en raison du mouvement provoqué par la matière plastique lorsqu'elle entre en contact avec l'insert au moment du remplissage de la chambre de moulage. Cependant, l'exactitude de la position de l'insert sur le composant est importante pour permettre à l'insert de remplir sa fonction. Par exemple, lorsque l'insert est utilisé pour fixer deux composants, un positionnement précis permet la bonne connexion de l'insert avec l'autre composant du véhicule. En particulier, un bon positionnement permet de garantir la bonne adhésion et/ou la coaxialité des inserts qui comportent des filetages.

On connaît déjà plusieurs technologies existantes qui permettent de maintenir un insert dans un moule de compression ou dans un moule d'injection. Une technologie consiste à fixer l'insert manuellement avec une vis et un tournevis manuel ou électrique sur la paroi du moule, puis à détacher l'insert manuellement.

Une autre technologie consiste à maintenir l'insert sur la paroi du moule à l'aide d'un axe métallique simple coopérant avec un système hydraulique ; cependant, cette technologie permet seulement de fixer un insert orienté à la verticale selon la direction de fermeture du moule sur une paroi orientée à l'horizontale du moule.

Une autre technologie alternative consiste à mettre en œuvre un axe métallique simple coopérerant avec un système de maintien magnétique ou électromagnétique pour maintenir l'insert sur la paroi du moule.

Par ailleurs, le document DE10313911A1 divulgue un moule pour former des composants en matière plastique ayant un trou fileté, ce moule comportant un système de dévissage de l'outil de rotation du trou. Le modèle d'utilité chinois CN205651601U divulgue un moule pour former une pièce de véhicule automobile en matière plastique comprenant un insert partiellement surmoulé, ce moule comportant un système de positionnement et de maintien de l'insert dans le moule.

Toutes les technologies citées ci-avant présentent des défauts.

La fixation manuelle des inserts ne convient pas à une production à cadence rapide, en particulier lorsque plusieurs inserts doivent être surmoulés sur un seul et même composant, car l'opération manuelle nécessite un temps trop long.

L'utilisation de la technologie avec axe hydraulique ne permet pas de maintenir les inserts sur la paroi des moules orientés à la verticale, et ne permet pas non plus que l'insert épouse la paroi de façon étanche. Par ailleurs, cette technologie ne permet pas de limiter la rotation de l'insert autour de l'axe. En outre, cette technologie autorise habituellement la présence d'un interstice autour de l'axe pour faciliter l'insertion de cet axe dans l'insert. Cependant, cet interstice nuit à l'exactitude de la position finale de l'insert sur le composant, ce qui n'est pas souhaitable.

L'utilisation de la technologie avec axe magnétique ou électromagnétique limite le matériau utilisé pour la fabrication des inserts. Seuls les inserts aimantés, comme les inserts fabriqués en acier AlNiCo, peuvent être utilisés, tandis que les inserts en acier inoxydable ne sont pas compatibles avec cette technologie.

Dès lors, les systèmes déjà connus servant à maintenir les inserts dans les moules ne sont pas entièrement satisfaisants, car aucun de ces systèmes ne permet d'assurer toutes les fonctions suivantes :
- fabrication à haute cadence des composants ;
- maintien de l'insert sur une position orientée verticalement ou horizontalement par rapport à la direction de fermeture des moules ;
- garantie d'une épouse étanche entre l'insert et la paroi du moule ;
- prévention de toute rotation de l'insert sur la position maintenue ; ainsi que
- absence de limitation quant au matériau de fabrication de l'insert.

La présente invention a pour but de réaliser dans toute la mesure du possible toutes les fonctions énoncées ci-avant ; pour cela, un moule est proposé pour la fabrication des composants pour véhicules automobiles ; ces composants pour véhicules automobiles sont fabriqués en matière plastique et comportent un insert fileté partiellement surmoulé ; le moule comporte une première partie et une deuxième partie qui délimitent une chambre de moulage, ainsi qu'un système de maintien d'insert servant à maintenir l'insert dans le moule. Ce moule est caractérisé en ce que le système de maintien d'insert comporte un moteur servant à serrer un composant à vis sur l'insert et permettant de déplacer ce composant à vis de façon à ce que l'insert, par le biais d'un mouvement de rotation et de translation, soit serré sur le composant à vis ; le moteur comporte une butée apte à coopérer avec une contre-butée pour faire en sorte que lorsque la butée entre en contact avec la contre-butée, le mouvement de translation du composant à vis est empêché, sans que cela n'ait d'effet sur le mouvement de rotation du composant à vis.

Ce système de maintien d'insert peut, par le biais d'un mouvement de translation et de rotation, faire en sorte que le composant à vis et l'insert fileté soient associés. Après que le mouvement de translation du composant à vis est empêché, le composant continue à tourner avec l'aide du moteur, de sorte que la portion filetée de l'insert continue à être serrée sur le composant à vis, jusqu'à ce que l'insert épouse de façon étanche la paroi du moule. Quelle que soit l'orientation de l'insert, il suffit que la portion filetée de l'insert soit alignée avec le composant à vis pour que l'insert soit fixé sur la position voulue. L'insert fixé de cette façon ne risque pas de bouger et peut épouser de façon étanche la paroi du moule, de façon à éviter que le matériau de surmoulage ne coule entre l'insert et la cavité. Étant donné que le composant à vis est entraîné par le moteur, ce moule convient à la production à cadence rapide de composants. Ce moule peut encore comporter plusieurs systèmes de maintien d'insert pour permettre le surmoulage simultané de composants comportant plusieurs inserts. Par ailleurs, ce moule convient aux inserts filetés de tous matériaux et de toutes formes.

Le moteur peut être un moteur électrique, un moteur hydraulique, ou un moteur d'un autre type.

Le moule selon la présente invention peut comporter l'une ou plusieurs des caractéristiques suivantes, prises seules ou en combinaison :
- Le composant à vis comporte une tige filetée complémentaire de l'orifice fileté de l'insert. La tige filetée de ce composant à vis peut s'insérer dans l'orifice fileté de l'insert, et donc maintenir l'insert de manière immobile sur la paroi du moule.
- Le composant à vis comporte un orifice fileté qui est complémentaire de la portion filetée en saillie qui se trouve sur l'insert. L'orifice fileté de ce composant à vis peut envelopper la portion filetée en saillie de l'insert, et donc maintenir l'insert de manière immobile sur la paroi du moule.
- Le système de maintien d'insert comporte un anneau qui entoure le composant à vis ; cet anneau comporte un filetage interne qui est complémentaire du filetage externe du composant à vis ; cet anneau ne peut se déplacer qu'en translation par rapport au composant à vis. Cet anneau sert à supporter le composant à vis, et le filetage que comporte l'anneau peut coopérer avec le filetage du composant à vis, et donc ne pas gêner le mouvement de rotation du composant à vis. Par ailleurs, cet anneau peut encore contrebalancer la force produite par le déplacement de l'insert sur le composant à vis, et donc réduire la force que doit subir ce composant à vis.
- Le système de maintien d'insert comporte un amortisseur qui permet d'amortir le mouvement de translation de l'anneau par rapport au composant à vis. Par exemple, cet amortisseur est un ressort ou un manchon fabriqué dans un matériau élastique.
- Le composant à vis comprend un axe externe et un axe interne. Cet axe externe et cet axe interne sont associés dans le mouvement de rotation et comprennent des filetages qui sont complémentaires ; l'axe interne est installé à l'intérieur de l'axe externe et peut se déplacer en un mouvement de translation par rapport à l'axe externe. Étant donné que cet axe interne peut se déplacer en un mouvement de translation indépendant par rapport à l'axe externe, avant que l'insert ne soit serré sur le composant à vis, s'il y a un écart de distance entre la position dans laquelle l'insert est placé dans le moule et la paroi du moule, le composant à vis peut malgré tout serrer la portion filetée de l'insert sur le composant à vis, et renforcer donc l'étanchéité entre l'insert et la paroi du moule.
- Le filetage externe de l'axe externe peut coopérer avec le filetage interne de l'anneau qui entoure le composant à vis ; cet anneau ne peut se déplacer qu'en un mouvement de translation par rapport au composant à vis ; l'extrémité de l'axe interne comporte un filetage apte à coopérer avec l'insert.
- Le système de maintien d'insert comporte un autre amortisseur qui se trouve à l'intérieur de l'axe externe ; cet autre amortisseur permet d'amortir le mouvement de translation de l'axe interne par rapport à l'axe externe. Par exemple, cet amortisseur est un ressort ou est fabriqué dans un matériau élastique.

Des explications détaillées sont données ci-dessous en se référant aux figures annexées. L'homme du métier comprendra facilement que ces figures ne sont utilisées que dans un but explicatif, et ne constituent en aucune façon une limitation de la portée de protection de la présente invention.

La Figure 1 montre de façon schématique un moule selon un mode de réalisation de la présente invention.

Les Figures 2 à 8 montrent de façon schématique un moule selon un autre mode de réalisation de la présente invention à différentes étapes de son utilisation.

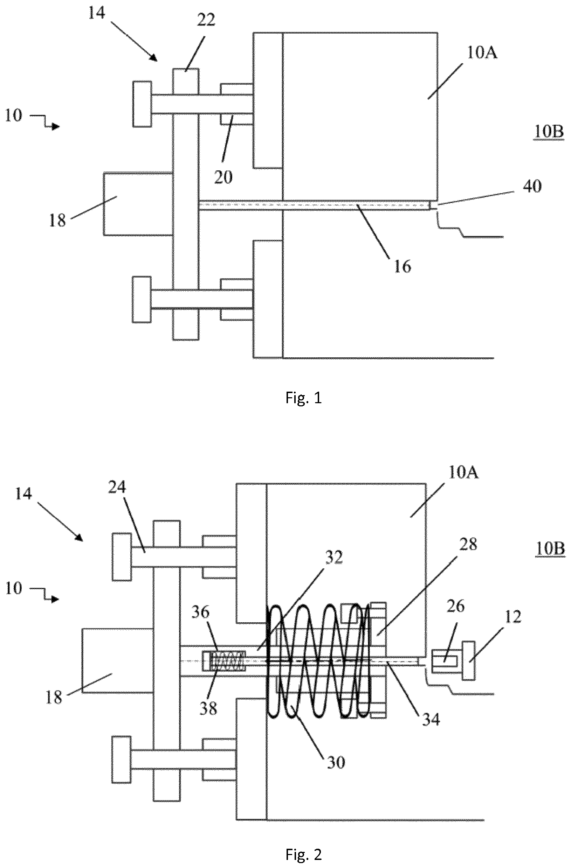

La Figure 1 montre un moule 10 servant au moulage de composant pour véhicule automobile selon un mode de réalisation ; le composant pour véhicule automobile est fabriqué en matière plastique et comporte un insert fileté 12 partiellement surmoulé (voir la Figure 2). Ce moule 10 comporte un système de maintien d'insert 14 servant à maintenir l'insert 12 dans le moule 10. Le moule 10 comprend une première partie moulante 10A et une deuxième partie moulante (non représentée) ; ces deux parties délimitent une chambre de surmoulage 10B pour l'insert 12. Le système de maintien d'insert 14 comprend un moteur 18 servant à serrer le composant à vis 16 sur l'insert 12 et permettant de déplacer le composant à vis 16, de façon à faire en sorte que l'insert 12 puisse être serré sur le composant à vis 16 par le biais d'un mouvement de translation et d'un mouvement de rotation. Le moteur 18 comporte une butée 22 qui peut coopérer avec une contre-butée 20 ; la contre-butée 20 est fixée sur la première partie 10A, tandis que la butée 22 est montée mobile en mouvement de translation sur la première partie 10A par le biais des moyens de fixation 24. Lorsque la butée 22 entre en contact avec la contre-butée 20, le mouvement de translation du composant à vis 16 est empêché, mais cela n'a pas d'effet sur le mouvement de rotation du composant à vis 16.

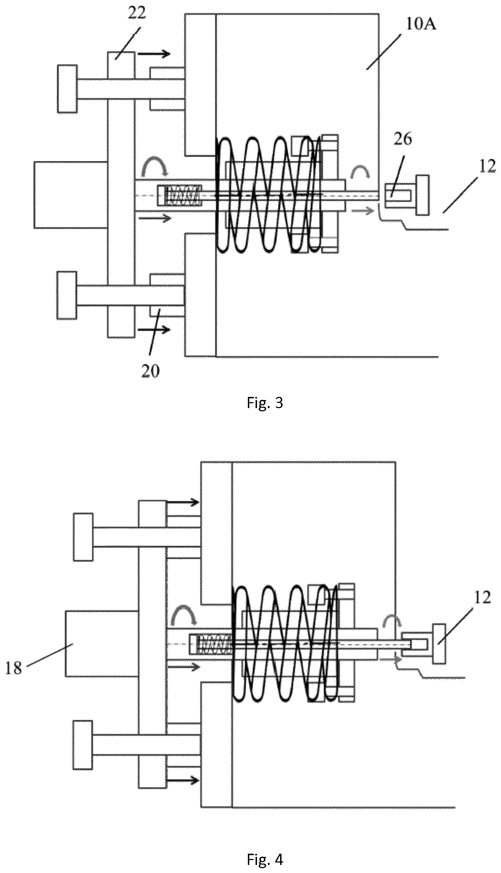

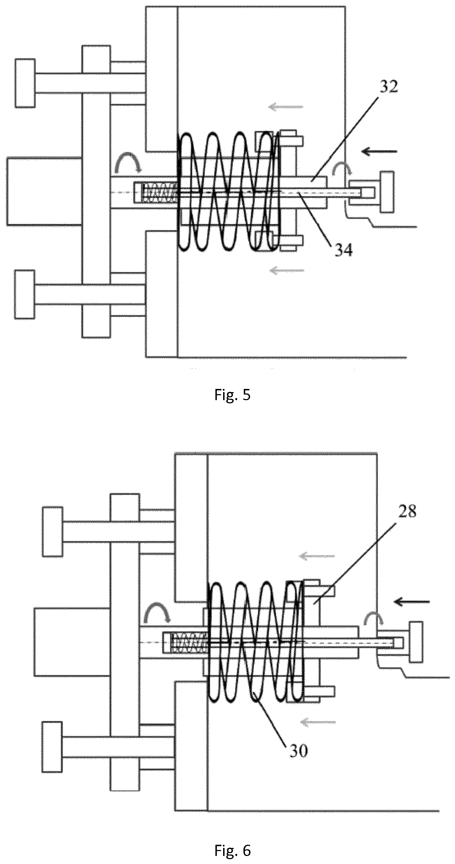

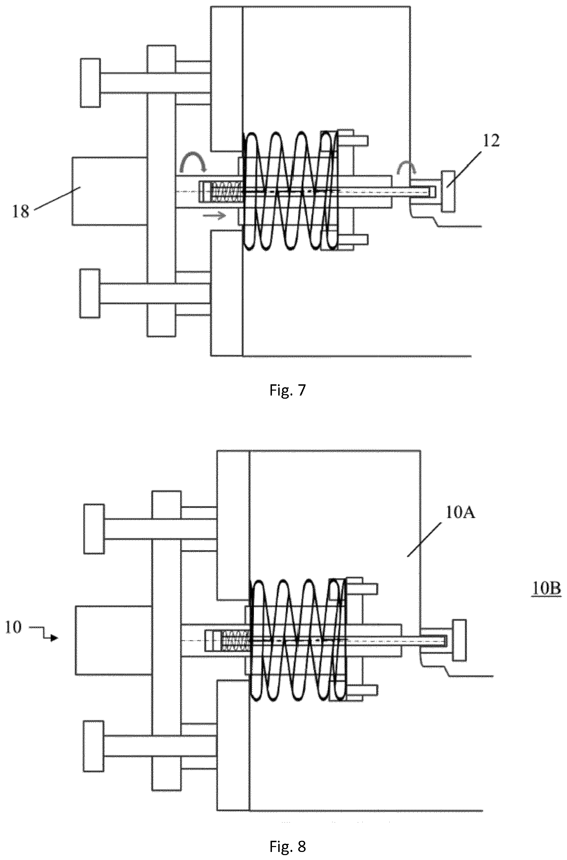

Dans le mode de réalisation montré sur les Figures 1 à 8, le composant à vis 16 est une tige ; l'une des extrémités de la tige est reliée au moteur 18 tandis que l'autre extrémité comporte un filetage ; ce filetage est complémentaire de l'orifice fileté 26 qui se trouve sur l'insert 12.

Les Figures 2 à 8 montrent un autre mode de réalisation de la présente invention ; les différences du moule de ce mode de réalisation par rapport au moule de la Figure 1 résident en ce que le système de maintien d'insert 14 de ce moule comprend en outre un anneau 28 qui entoure le composant à vis 16 et un ressort 30 ; le composant à vis 16 comporte un axe externe 32 et un axe interne 34 ; l'axe interne 34 est placé à l'intérieur de l'axe externe 32 et peut se déplacer en un mouvement de translation par rapport à l'axe externe 32. L'intérieur de l'axe externe 32 comprend en outre une cavité 36 ; l'une des extrémités de l'axe interne 34 est placée dans cette cavité 36 ; cette extrémité a été conçue de façon à ne pas pouvoir sortir de la cavité 36. Dans la cavité 36 a été mis en place un ressort 38 ; la rigidité du ressort 38 est inférieure à celle du ressort 30.

L'axe interne 34 comporte un filetage s'étendant de l'extrémité libre de l'axe interne 34 dirigeant vers la chambre de moulage 10B jusqu'à la cavité 36.L'anneau 28 comporte à l'intérieur un filetage, tandis que l'axe externe 32 comportent à l'intérieur et l'extérieur respectivement un filetage interne et un filetage externe. Le filetage interne de l'axe externe 32 est complémentaire du filetage de l'axe interne 34, de façon à faire en sorte que l'axe interne 34 puisse se déplacer en un mouvement de rotation et de translation par rapport à l'axe externe 32 ; le filetage externe de l'axe externe 32 est complémentaire du filetage à l'intérieur de l'anneau 28, de façon à faire en sorte que l'anneau 28 puisse se déplacer en un mouvement de translation par rapport à l'axe externe 32. Le filetage qui se trouve sur l'extrémité libre de l'axe interne 34 peut coopérer avec l'orifice 26 de l'insert 12, de façon à faire en sorte que l'insert 12 soit serré sur l'axe interne 34.

L'une des extrémités du ressort 30 est fixée sur la première partie 10A, l'autre extrémité étant fixée sur l'extrémité de l'anneau 28 dirigeant vers la chambre de moulage 10B ; dès lors, lorsque l'anneau 28 se déplace en s'éloignant de la chambre de moulage 10B, le ressort 30 est comprimé de façon à amortir le mouvement de translation de l'anneau 28 par rapport au composant à vis 16.

L'une des extrémités du ressort 38 est fixée sur l'extrémité de l'axe interne 34 située dans la cavité 36 ; l'autre extrémité est fixée sur la paroi de la cavité 36 ; dès lors, lorsque l'axe interne 34 se déplace en direction de la chambre de moulage 10B, le ressort 38 est comprimé, de façon à amortir le mouvement de translation de l'axe interne 34 par rapport à l'axe externe 32.

Va maintenant être décrite la façon dont l'insert 12 est fixé sur la paroi de la chambre de moulage 10B par le biais du système de maintien d'insert 14 (voir les Figures 2 à 8).

Tout d'abord, l'insert 12 est placé dans la chambre de moulage 10B ouverte, en prenant bien soin d'aligner l'orifice 26 avec l'orifice 40 comportant le trajet de l'axe interne 34 de la première partie 10A.

Le moteur 18 est démarré. Le moteur 18 et la butée 22 se déplacent en direction de la chambre de moulage 10B, et en même temps le moteur 18 imprime un mouvement de rotation au composant à vis 16 comprenant l'axe externe 34 et l'axe interne 32. À ce moment-là, l'anneau 28 ne bouge pas, et l'axe interne 34 ne bouge pas par rapport à l'axe externe 32. L'axe interne 34 ressort de la première partie 10A et entre dans l'orifice 26 de l'insert 12, serrant ainsi l'insert 12 sur son extrémité.

Lorsque la butée 22 heurte et vient buter contre la contre-butée 20, le moteur 18 cesse de se déplacer, ce qui entraîne la fin de la translation du composant à vis 16, sans cependant interrompre sa rotation. Étant donné que l'insert 12 est déjà partiellement serré sur l'axe interne 34, la rotation de l'axe interne 34 entraîne la poursuite de son enfoncement dans l'orifice 26 de l'insert 12, jusqu'à ce que l'insert 12 épouse de façon étanche la paroi du moule. Lorsque l'insert 34 ne fait que tourner sans se déplacer, l'anneau 28, sous l'effet du filetage, se déplace en s'éloignant de la chambre de moulage, et en même temps ce mouvement est amorti par le ressort 30 qui est comprimé.

Lorsque l'insert 12 entre en contact avec la paroi du moule, étant donné que le moteur 18 continue à faire tourner le composant à vis 16 et que le ressort 30 a déjà été comprimé à un certain niveau, l'axe interne 34 tourne de façon indépendante par rapport à l'axe externe 32 et se déplace en s'enfonçant dans l'orifice 26. Le déplacement de l'axe interne 34 est amorti par la compression du ressort 38. Lorsque l'extrémité libre de l'axe interne 34 touche le fond de l'orifice 26, le moteur arrête de fonctionner.

À ce moment-là, l'insert 12 épouse de façon étanche la paroi du moule, et est maintenu dans cette position jusqu'à la fin du processus de moulage. Lorsque le moulage est terminé, le système de maintien d'insert 14 libère l'orifice 26 de l'insert 12 en suivant le processus et l'ordre inverses, de façon à extraire de la chambre de moulage le composant moulé.

## Revendications

1. Moule pour former des composants de véhicule automobile, ces composants étant fabriqués en matière plastique et comportant un insert fileté partiellement surmoulé, le moule comprenant une première partie et une seconde partie délimitant une chambre de moulage, et un système de maintien d'insert destiné à maintenir l'insert dans le moule, **caractérisé en ce que** le système de maintien d'insert comprend un moteur et un composant à vis destiné à être vissé sur l'insert, le moteur apte à déplacer le composant à vis de sorte que l'insert est fixé sur le composant à vis par des mouvements de translation et de rotation, ce moteur comportant une butée apte à coopérer avec une contre-butée de manière à ce que lorsque la butée entre en contact avec la contre-butée, le mouvement de translation du composant à vis est empêché, sans que cela n'ait d'influence sur le mouvement de rotation du composant à vis.

2. Moule selon la revendication 1, dans lequel le composant à vis comporte une tige filetée complémentaire d'un orifice fileté sur l'insert.

3. Moule selon la revendication 1, dans lequel le composant à vis comporte un orifice fileté complémentaire d'une portion en saillie filetée de l'insert.

4. Moule selon l'une quelconque des revendications 1 à 3, dans lequel le système de maintien d' insert comprend un anneau entourant le composant à vis, cet anneau comportant un filetage interne complémentaire du filetage externe du composant à vis, et cet anneau ne pouvant se déplacer que par translation par rapport au composant à vis.

5. Moule selon la revendication 4, dans lequel le système de maintien d'insert comporte un amortisseur permettant d'amortir le mouvement de translation de l'anneau par rapport au composant à vis.

6. Moule selon l'une quelconque des revendications 1 à 3, dans lequel le composant à vis comporte un axe externe et un axe interne associés dans le mouvement de rotation et comportent chacun des filetages qui sont réciproquement complémentaires, l'axe interne étant placé à l'intérieur de l'axe externe et apte à effectuer un mouvement de translation par rapport à l'axe externe.

7. Moule selon la revendication 6, dans lequel l'axe externe comporte un filetage externe apte à coopérer avec le filetage interne de l'anneau qui entoure le composant à vis, l'anneau ne pouvant se déplacer que par un mouvement de translation par rapport au composant à vis, l'axe interne comprenant à son extrémité un filetage apte à coopérer avec l'insert.

8. Moule selon la revendication 6 ou 7, dans lequel le système de maintien de l'insert comporte un autre amortisseur à l'intérieur de l'axe externe, cet autre amortisseur permettant d'amortir le mouvement de translation de l'axe interne par rapport à l'axe externe.

## Patentansprüche

1. Form zum Formen von Kraftfahrzeugkomponenten, wobei die Komponenten aus Kunststoffmaterial hergestellt sind und einen teilweise umspritzten Gewindeeinsatz aufweisen, wobei die Form einen ersten Teil und einen zweiten Teil, die eine Formkammer definieren, und ein Einsatzhaltesystem zum Halten des Einsatzes in der Form aufweist, **dadurch gekennzeichnet, dass** das Einsatzhaltesystem einen Motor und eine Schraubenkomponente zum Aufschrauben auf den Einsatz aufweist, wobei der Motor eingerichtet ist, die Schraubenkomponente so zu bewegen, dass der Einsatz durch Translations- und Rotationsbewegungen an der Schraubenkomponente befestigt wird, wobei der Motor einen Anschlag aufweist, der eingerichtet ist, mit einem Gegenanschlag derart zusammenzuwirken, dass, wenn der Anschlag mit dem Gegenanschlag in Kontakt kommt, die Translationsbewegung der Schraubenkomponente verhindert wird, ohne dass dies irgendeinen Einfluss auf die Rotationsbewegung der Schraubenkomponente hat.

2. Form nach Anspruch 1, wobei die Schraubenkomponente einen Gewindeschaft aufweist, der zu einem Gewindeloch im Einsatz komplementär ist.

3. Form nach Anspruch 1, wobei die Schraubenkomponente ein Gewindeloch hat, das zu einem mit Gewinde versehenen vorstehenden Abschnitt des Einsatzes komplementär ist.

4. Form nach einem der Ansprüche 1 bis 3, wobei das Einsatzhaltesystem einen Ring aufweist, der die Schraubenkomponente umgibt, wobei der Ring ein Außengewinde der Schraubenkomponente aufweist und der Ring nur in Translation relativ zu der Schraubenkomponente beweglich ist.

5. Form nach Anspruch 4, wobei das Einsatzhaltesystem einen Dämpfer zur Dämpfung der Translationsbewegung des Rings relativ zur Schraubenkomponente aufweist.

6. Form nach einem der Ansprüche 1 bis 3, bei der die Schraubenkomponente eine Außenachse und eine Innenachse aufweist, die bei der Drehbewegung miteinander verbunden sind und jeweils Gewinde aufweisen, die zueinander komplementär sind, wobei sich die Innenachse innerhalb der Außenachse befindet und eine Translationsbewegung relativ zur Außenachse ausführen kann.

7. Form nach Anspruch 6, bei der die Außenachse ein Außengewinde aufweist, das mit dem Innengewinde des Rings, der die Schraubenkomponente umgibt, zusammenwirken kann, wobei der Ring nur durch eine Translationsbewegung relativ zu der Schraubenkomponente beweglich ist, und die Innenachse an ihrem Ende ein Gewinde aufweist, das mit dem Einsatz zusammenwirken kann.

8. Form nach Anspruch 6 oder 7, wobei das Einsatzhaltesystem einen weiteren Dämpfer innerhalb der äußeren Achse aufweist, wobei der weitere Dämpfer die Translationsbewegung der inneren Achse relativ zur äußeren Achse dämpft.

## Claims

1. Mould for forming motor vehicle components, these components being made of plastic and comprising a partially overmoulded threaded insert, the mould comprising a first part and a second part defining a moulding chamber, and an insert holding system intended to hold the insert in the mould, **characterised in that** the insert holding system comprises a motor and a screw component intended to be screwed on the insert, the motor being adapted to move the screw component such that the insert is fixed to the screw component by translation and rotation movements, this motor comprising a stop adapted to cooperate with a counter-stop so that when the stop comes into contact with the counter-stop, the translation movement of the screw component is prevented, without this having any effect on the rotation movement of the screw component.

2. Mould according to claim 1, wherein the screw component comprises a threaded rod complementary to a threaded orifice in the insert.

3. Mould according to claim 1, wherein the screw component comprises a threaded orifice complementary to a threaded projecting portion of the insert.

4. Mould according to any one of claims 1 to 3, wherein the insert holding system comprises a ring surrounding the screw component, this ring comprising an internal thread complementary to the external thread of the screw component, and this ring only being able to move by translation relative to the screw component.

5. Mould according to claim 4, wherein the insert holding system comprises a damper to dampen the translation movement of the ring relative to the screw component.

6. Mould according to any one of claims 1 to 3, wherein the screw component comprises an external axis and an internal axis associated in the rotation movement and each comprising threads which are reciprocally complementary, the internal axis being placed inside the external axis and adapted to perform a translation movement relative to the external axis.

7. Mould according to claim 6, wherein the external axis comprises an external thread adapted to cooperate with the internal thread of the ring which surrounds the screw component, the ring only being able to move by a translation movement relative to the screw component, the internal axis comprising at its end a thread adapted to cooperate with the insert.

8. Mould according to claim 6 or 7, wherein the insert holding system comprises another damper inside the external axis, this another damper allowing to damp the translation movement of the internal axis relative to the external axis.
